# DEMANDE DE BREVET EUROPEEN

(11) **EP 2 128 097 A1**
(43) Date de publication de la demande: **02.12.2009**
(21) Numéro de dépôt: 08009794.2
(22) Date de dépôt: 29.05.2008
(51) Int. Cl.: C02F 3/30, C02F 3/22

(54) **Dispositif d'épuration d'eaux résiduaires urbaines par boues activées en réacteur fermé**

(71) Demandeur: Welter, André, 7517 Mersch (LU)
(72) Inventeur: Welter, André, 7517 Mersch (LU)
(74) Mandataire: pronovem

(57) **Abrégé**

La présente invention se rapporte à un dispositif de traitement biologique des eaux usées comprenant un bassin (1) de forme essentiellement tronconique, des moyens d'entrée de l'eau usée à épurer (3), des moyens de sortie et d'affinement de l'eau épurée (4), des moyens d'évacuation des boues excédentaires (6), des moyens d'aération (7), alimentant le bassin (1) en gaz, disposés dans la partie inférieure dudit bassin (1), des moyens de recyclage du gaz desdits moyens d'aération (7), au moins un conduit élévateur (9) surplombant lesdits moyens d'aération (7) et comprenant un plateau épandeur (10) de forme essentiellement tronconique comprenant une couronne de déversement (11), une couverture (12) disposée sur ledit plateau épandeur (10), ladite couverture (12) comprenant un diffuseur (13) de forme essentiellement tronconique un collecteur de gaz (14) et une paroi plongeante (16).

## Description

### Objet de l'invention

La présente invention se rapporte à un dispositif d'épuration par traitement biologique des eaux usées domestiques ou industrielles provenant de réseaux d'égout séparatifs ou unitaires.

### Etat de la technique

Le traitement des eaux usées s'effectue généralement dans des stations d'épuration, et comprend communément trois étapes, appelées traitement primaire, traitement secondaire, et traitement tertiaire.

Le traitement primaire concerne toutes les particules contenues dans les eaux usées qui peuvent être extraites par voie mécanique, à savoir par tamisage, filtration, centrifugation et/ou décantation ou flottation. Parmi ces particules, on trouve par exemple du gravier, du sable, du limon, des déchets variés tel que du métal, du bois, des matières plastiques, du papier, des tissus, mais également des matières organiques telles que des graisses, des huiles, et toutes sortes de déchets issus de l'activité humaine domestiques. Leur séparation ou extraction se fait à l'entrée de la station d'épuration par l'emploi de divers dispositifs tels que des grilles, des tamis, des dessableurs, des dégraisseurs, des séparateurs et des bassins de décantation.

Les traitements secondaires et tertiaires concernent toute matière qui n'a pas été extraite par le traitement primaire, à savoir les particules fines en suspension et les substances en solution.

Le traitement secondaire s'effectue par voie biologique, raison pour laquelle il est communément appelé « traitement biologique ». Ce traitement se compose de deux processus.

Le premier processus reproduit les phénomènes d'autoépuration existant dans la nature, et repose sur l'activité des bactéries contenues dans les eaux usées pour dégrader la matière organique. Ainsi un réacteur biologique entretient une culture de bactéries, agglomérées sous la forme de flocs (agrégats), ou de biofilms (bactéries sur support) dont l'ensemble forme la biomasse. Cette culture bactérienne nécessite des conditions favorables à sa croissance. Dans un réacteur riche en oxygène, les matières organiques à base de carbone et d'azote sont métabolisées par une biomasse aérobie et transformées en dioxyde de carbone, qui s'échappe du réacteur, mais également en nitrates et nitrites, qui restent en solution.

A l'issue de ce processus, le réacteur contient un mélange d'eau épurée et de biomasse qu'il est nécessaire de séparer afin de pouvoir déverser l'eau épurée dans une rivière émissaire, ce qui est réalisé au moyen du deuxième processus.

Au cours de ce deuxième processus, la séparation de l'eau et de la biomasse se fait généralement par décantation dans un dispositif distinct du réacteur biologique (dans un décanteur dit secondaire) par l'action de la gravité ou par l'utilisation de dispositifs de filtration. Or, dans le cas de réacteurs à flocs, donc à biomasse libre, appelés réacteurs à boues activées, le flux d'eau du bassin d'activation vers le décanteur entraîne une partie de la biomasse hors du bassin d'activation. Il en résulte une diminution continuelle de la quantité de biomasse dans le bassin d'activation, ce qui a pour conséquence de réduire l'efficacité épuratoire dudit bassin et donc du réacteur biologique. C'est pourquoi, la biomasse, issue de la décantation doit être réinjectée dans le bassin d'activation du réacteur pour y continuer son activité. Néanmoins, cette solution requiert l'utilisation de dispositifs de collecte des boues et de dispositifs de pompage, et nécessite également un apport en énergie pour le fonctionnement des dispositifs en question.

De plus, un décanteur secondaire présente l'inconvénient de ne pas pouvoir fonctionner avec une forte teneur en biomasse. Généralement, pour de tels dispositifs, la teneur en matière sèche se situe à environ 3,5 kg/m³, sans dépasser 4 kg/m³.

Le traitement secondaire permet ainsi de réduire la quantité de substances organiques contenues dans l'eau usée, et permet donc une épuration de l'eau. Auparavant, le traitement secondaire terminait le processus épuratoire, et les eaux ainsi traitées, mais contenant les dérivés azotés et du phosphore, étaient déversées dans les cours d'eau et les lacs, ce qui avait un impact négatif du point de vue environnemental.

Le traitement tertiaire a été introduit dans le processus épuratoire afin de réduire, voire éliminer, les composés azotés et le phosphore.

Concernant l'élimination des composés azotés, le traitement tertiaire consiste à utiliser les bactéries dites dénitrifiantes pour dégrader les nitrites et nitrates en azote gazeux. Comme les bactéries dénitrifiantes nécessitent des conditions anaérobies, cette opération est réalisée généralement soit dans deux réacteurs séparés, soit dans un réacteur unique.

Pour ce qui concerne l'élimination du phosphore, les procédés utilisés pour son élimination sont très variés On peut citer, à titre d'exemple, l'utilisation d'agents chimiques qui permettent la précipitation des composés phosphorés.

Dans le bassin d'activation de réacteurs à boues activées, l'aération du mélange eau/biomasse/matières organiques (appelé liqueur mixte), est assurée par des aérateurs, dont il existe différents types, alors que le brassage est assuré par des agitateurs mécaniques. Néanmoins, la dissociation de la fonction d'aération et de brassage présente l'inconvénient de nécessiter deux dispositifs différents.

Il existe par ailleurs des aérateurs qui assurent également une fonction de brassage de la biomasse, c'est le cas, par exemple, du réacteur biologique décrit dans le document US3807563, qui utilise un dispositif de pompage par injection d'air, encore appelé « Airlift ». Ce dispositif permet, grâce à l'injection d'air dans la partie inférieure d'une canalisation, d'y entrainer le liquide qui s'y trouve par un effet gravitationnel basé sur la différence de densité entre la masse d'eau expansée par fines bulles de gaz et la masse d'eau non expansée. Utilisé dans un réacteur biologique, le dispositif permet de créer une circulation de la liqueur mixte et d'en assurer l'agitation ; il permet également d'oxygéner la liqueur mixte. Néanmoins, un tel réacteur biologique ne permet pas de combiner, en un seul dispositif, un traitement secondaire (aérobie) et un traitement tertiaire (anaérobie).

Des réacteurs biologiques mixtes, qui combinent le traitement secondaire et tertiaire, ont été proposés. Par exemple, les documents DE3916520 et JP9323092 décrivent des réacteurs biologiques mixtes qui sont compartimentés d'une part en une zone aérobie dans laquelle le brassage et l'oxygénation de la liqueur mixte se fait par un dispositif de type airlift, et d'autre part en une zone anaérobie, dans laquelle la dénitrification peut s'effectuer. Néanmoins dans de tels réacteurs, le traitement tertiaire est peu efficace car, non seulement les conditions anaérobies sont insuffisantes, mais de plus, le volume alloué à la dénitrification est faible, ce qui ne permet pas d'obtenir une dénitrification efficace.

Des réacteurs combinés, intégrant le décanteur au bassin d'activation, ont également été proposés dans le but d'éliminer le système de recirculation des boues. Par exemple, les documents JP9323092, DE3916520, et US4211657 décrivent de tels réacteurs où une zone de décantation est obtenue au moyen de cloisons qui permettent le passage des boues décantées vers la chambre d'activation. Toutefois, dans de tels réacteurs, la turbulence de la liqueur mixte, provoquée par le dispositif d'aération de la chambre d'activation, se propage inévitablement au décanteur, au travers des ouvertures de passage de boues aménagées dans les cloisons, ce qui a pour conséquence de provoquer des remous qui perturbent fortement le processus de décantation ou de séparation.

De plus, de tels réacteurs sont en outre, non seulement d'un coût de fabrication et de fonctionnement élevé, mais ils sont également mal adaptés pour une utilisation dans un réseau d'égout mixte transportant des débits élevés en période de pluie.

### Buts de l'invention

La présente invention propose un réacteur de traitement biologique des eaux usées qui ne présente pas les inconvénients de l'état de la technique.

Elle vise à fournir un réacteur de traitement biologique des eaux usées dans lequel les traitements secondaire et tertiaire sont réalisés dans la même enceinte du réacteur.

Elle vise également à fournir un réacteur de traitement biologique des eaux usées qui fonctionne avec une forte teneur en biomasse et une faible production de boues excédentaires.

Elle vise de plus à fournir un réacteur de traitement biologique des eaux usées qui fournit une eau épurée de haute qualité.

Elle vise à fournir un réacteur de traitement biologique des eaux usées qui n'émet pas de gaz malodorants.

Elle vise également à fournir un réacteur de traitement biologique des eaux usées qui ne présente un minimum d'équipement en mouvement et aucun équipement en mouvement sous eau.

Elle vise également à fournir un réacteur de traitement biologique peu complexe, facile à mettre en oeuvre et facile d'entretien.

Elle vise de plus à fournir un réacteur de traitement biologique des eaux usées qui ne réduit la consommation d'énergie.

### Résumé de l'invention

La présente invention décrit un réacteur de traitement biologique des eaux usées comprenant un bassin de forme essentiellement tronconique, des moyens d'entrée de l'eau usée à épurer, des moyens de sortie et d'affinement de l'eau épurée, des moyens d'évacuation des boues excédentaires, des moyens d'aération, alimentant le bassin en gaz, disposés dans la partie inférieure dudit bassin, des moyens de recyclage du gaz desdits moyens d'aération, au moins un conduit élévateur surplombant lesdits moyens d'aération et comprenant un plateau épandeur de forme essentiellement tronconique comprenant une couronne de déversement, une couverture disposée sur ledit plateau épandeur, ladite couverture comprenant un diffuseur de forme essentiellement tronconique, un collecteur de gaz et une paroi plongeante.

Le terme « essentiellement tronconique » signifie qu'il peut s'agir de toute forme comportant des secteurs tronconiques, par exemple une forme tronco-pyramidale ou une forme tronconique de section circulaire, elliptique ou ovale. La forme peut également être un exact tronc de cône.

Selon des formes particulières de réalisation de l'invention, celle-ci comporte l'une ou une combinaison quelconque de plusieurs des caractéristiques suivantes :
- les parois latérales du bassin forment, avec le plan horizontal formé par la base dudit bassin, un angle α d'au moins 60°.
- les parois latérales du plateau épandeur forment, avec le plan horizontal formé par la base dudit bassin, un angle β de moins de 25°.
- les parois latérales du diffuseur forment, avec le plan horizontal formé par la base du bassin, un angle γ de moins de 12°.
- la paroi plongeante forme avec le plan vertical un angle compris entre 0 et 30°.
- les moyens d'aération comprennent au moins un aérateur comprenant une membrane déformable percée de trous.
- les moyens d'aération comprennent des moyens d'alimentation en gaz.
- les moyens d'alimentation en gaz comprennent au moins un compresseur.
- le collecteur de gaz se présente sous la forme d'une galerie circonférentielle raccordée au bord du diffuseur.
- les moyens de recyclage du gaz desdits moyens d'aération comprennent au moins une buse, une canalisation pour le retour du gaz vers les moyens d'alimentation en gaz, une vanne à trois voies et un clapet anti-retour.
- les moyens de sortie et d'affinement de l'eau épurée comprennent un chenal-décanteur disposé de façon circonférentielle sur la partie supérieure du bassin, lesdits moyens de sortie et d'affinement de l'eau épurée comprenant en outre un dispositif de rinçage et de recirculation des boues.

La présente invention décrit également une méthode de traitement des eaux usées comprenant les étapes suivantes :
a) prendre le réacteur biologique selon l'invention,
b) remplir ledit réacteur avec de la liqueur mixte,
c) alimenter ledit réacteur avec de l'eau usée à épurer,
d) réaliser un traitement biologique aérobie de ladite eau usée en aérant le mélange de liqueur mixte et d'eau usée,
e) réaliser un traitement biologique anaérobie de ladite eau usée,
f) séparer la liqueur mixte en eau épurée et en biomasse,
g) récupérer l'eau épurée.

Selon des formes particulières de réalisation de l'invention, la méthode comporte l'une ou une combinaison quelconque de plusieurs des caractéristiques suivantes :
- l'étape e) est réalisée en recyclant l'air utilisé à l'étape d), ledit réacteur fonctionnant en circuit fermé, ou en interrompant l'aération de l'eau usée.
- les étapes d) et e) forment un cycle de traitement biologique, et la durée de l'étape d) représente environ 30% de la durée dudit cycle et la durée de l'étape e) environ 70% de la durée dudit cycle.

### Brève description des figures

La figure 1 représente une première forme de réalisation du réacteur de traitement biologique selon l'invention.

La figure 2 représente une seconde forme de réalisation du réacteur de traitement biologique selon l'invention.

La figure 3 représente schématiquement les agrégats (flocs) de bactéries formant la biomasse filtrante.

La figure 4 représente un dispositif permettant d'optimiser le rendement du séparateur du réacteur biologique selon l'invention, ainsi qu'un dispositif permettant le rinçage du chenal-décanteur avec récupération des boues.

### Description détaillée d'une forme d'exécution préférée de l'invention

Le réacteur biologique selon une forme préférée de l'invention comprend un bassin 1 de traitement biologique qui a une forme essentiellement tronconique. Le bassin 1 peut avoir toute forme comportant des secteurs tronconiques. Il peut s'agir par exemple d'un bassin tronco-pyramidal ou d'un bassin tronconique de section circulaire, elliptique ou ovale. De préférence, le bassin est un exact tronc de cône, avantageusement il a la forme d'un entonnoir, d'un tronc de cône inversé, dont le plan formé par la petite base se situe dans la partie inférieure du bassin 1.

Une forme de bassin circulaire et en entonnoir présente de nombreux avantages, notamment le fait que le régime des vitesses de circulation du liquide présent dans le bassin est identique pour toutes les sections verticales et radialès du réacteur. De plus, cette forme permet d'éviter le dépôt et l'accumulation de biomasse et,à favoriser son déplacement vers le fond du bassin sous l'effet de la pesanteur.

Les parois latérales du bassin 1 forment un angle α avec le plan horizontal formé par la petite base du tronc de cône. De préférence, l'angle α est d'au moins environ 60°.

De préférence, le bassin 1 comprend, dans sa partie inférieure, une base 2 circulaire.

De préférence, la base 2 du bassin 1 comprend les moyens d'aération 7. Il s'agit de tous moyens d'aération adéquats utilisant tout gaz adéquat, qui peuvent être couplés à tous moyens adéquats d'alimentation en gaz 19, en particulier en gaz sous pression.

De préférence, les moyens d'aération 7 comprennent au moins un aérateur à membrane comprenant un corps et une membrane déformable percée de trous. Avantageusement, le corps a la forme d'une assiette, sur laquelle est fixée la membrane, et il est alimenté en gaz, de l'air par exemple, par une canalisation 8. La membrane, finement percée de pores, est de telle sorte que ces pores ne laissent pas entrer l'eau, mais sous la pression du gaz, la membrane se déforme et les pores s'ouvrent pour laisser ainsi échapper le gaz sous la forme de fines bulles. De préférence, l'aérateur a la forme d'un disque et possède un diamètre correspondant à celui du conduit 9 qui le surplombe.

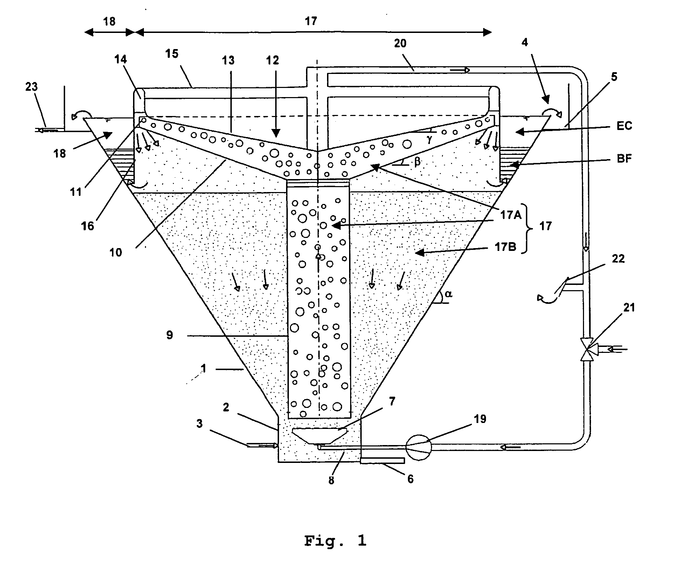

Dans une première forme de réalisation des moyens d'aération 7 selon l'invention, dans le cas d'une petite installation de traitement correspondant à environ 20 à 40 équivalents-habitants par exemple, les moyens d'aération 7 comprennent un seul aérateur (Fig.1).

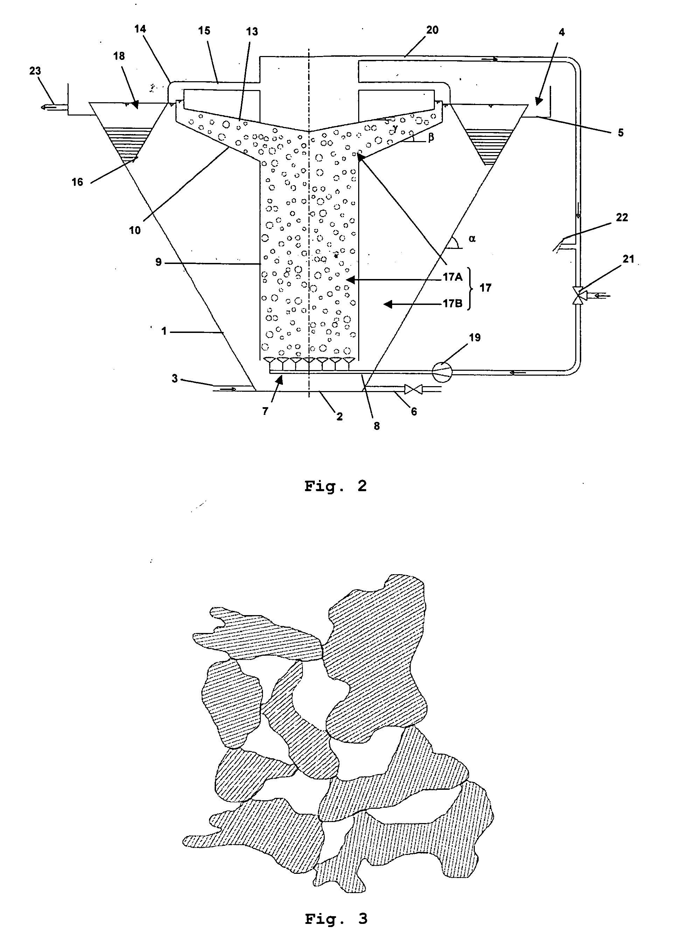

Dans une seconde forme de réalisation des moyens d'aération 7, dans le cas d'une installation correspondant à environ 1500 équivalents-habitants par exemple, les moyens d'aération 7 comprennent plusieurs aérateurs à membrane (fig. 2), disposés par exemple de façon à former un champ d'aération de forme circulaire.

De préférence, la base 2 du bassin 1 comprend en outre des moyens d'entrée de l'eau usée à épurer 3 et des moyens d'évacuation des boues excédentaires 6.

Le bassin 1 comprend en outre des moyens de sortie et d'affinement de l'eau épurée 4 qui comprennent un chenal-décanteur 5, disposée sur la partie supérieure et sur toute la circonférence du bassin 1, et qui assure la collecte de l'eau épurée, ainsi que son affinement par décantation. L'évacuation de l'eau épurée du chenal-décanteur 5 peut être assurée par tous moyens adéquats, de préférence il s'agit d'une canalisation 23 avec prise de deux niveaux, la prise inférieure étant équipée d'une vanne. Par ailleurs, le chenal-décanteur 5 est équipé d'un système de rinçage et de retour des boues 24 vers la base 2 du bassin 1

Dans une première forme particulière de réalisation de l'invention, au centre du bassin 1 et surplombant les moyens d'aération 7, se trouve un conduit élévateur 9 de forme cylindrique ou essentiellement tronconique ou tronconique, de diamètre égal ou inférieur à celui de l'aérateur, en acier ou béton armé par exemple. Le conduit élévateur 9 permet la remontée de la liqueur mixte vers la partie supérieure du bassin par un effet gravitationnel de type « airlift ». Dans sa partie inférieure, le conduit 9 n'est pas en contact avec la paroi du bassin 1 ; un espace subsiste afin de permettre la circulation de la liqueur mixte. Dans sa partie supérieure, le conduit 9 comprend un plateau épandeur 10.

Dans une seconde forme particulière de réalisation de l'invention, le réacteur comprend plusieurs conduits 9, surplombant un ou plusieurs aérateurs, dont les parties supérieures se rejoignent en un plateau épandeur 10. De préférence, les aérateurs forment un champ circulaire, et le diamètre du conduit-élévateur 9 est inférieur ou égal à celui du champ circulaire d'aérateurs.

Le plateau épandeur 10 a une forme essentiellement tronconique, de préférence une forme d'un tronc de cône renversé, et il comprend une couronne de déversement 11 disposée sur sa circonférence.

Le conduit-élévateur 9 et le plateau-épandeur 10 subdivisent la chambre d'activation 17 en deux zones d'activité distinctes au sein du bassin 1, une zone d'aération et de brassage 17A, et une zone de réaction et d'amortissement 17B où la métabolisation du substrat prédomine.

Le flux de liqueur mixte transporté par le conduit élévateur 9 s'épand sur le plateau-épandeur 10 en circulant vers son pourtour ce qui permet à la liqueur mixte d'être acheminée substantiellement horizontalement vers la périphérie de la zone d'aération et de brassage 17A puis de retomber dans la zone de réaction et d'amortissement 17B par l'intermédiaire de la couronne de déversement 11.

Les parois latérales du plateau épandeur 10 forment avec le plan horizontal formé par la base du tronc de cône du bassin 1, ou formé par la base 2, un angle β. De préférence, l'angle β est inférieur à l'angle α. Avantageusement, l'angle β est inférieur à environ 25°.
Avantageusement, l'angle β est d'environ 20°.

Le réacteur biologique comprend en outre une couverture 12 qui se positionne au dessus de l'épandeur 10, et clôt de façon substantiellement étanche au gaz le bassin 1. La couverture 12 est fixée par tous moyens adéquats, par exemple à l'aide de moyens venant se fixer sur des supports externes du bassin 1 ou du chenal-décanteur 5, ou par exemple par des moyens venant se fixer sur des supports internes disposés sur le conduit élévateur 9.

Un réacteur couvert présente l'avantage d'éviter la formation d'aérosols et de protéger les eaux en cours de traitement contre le froid en hiver, et contre la chaleur en été. De plus, cela offre la possibilité de gérer le processus épuratoire sur base de la composition chimique des gaz.

La couverture 12 comprend un diffuseur 13 essentiellement tronconique, tronconique ou conique. Le diffuseur 13 est positionné de telle sorte que le plan formé par la base du cône, ou la grande base du tronc de cône, se situe à un niveau plus bas que la crête de déversement du bassin formée par les moyens de sortie de l'eau épurée 4. Ainsi, le diffuseur 13 met la liqueur mixte, qui est emprisonnée entre le plateau épandeur 10 et le diffuseur 13, sous légère charge.

Les parois latérales du diffuseur 13 forment, avec le plan horizontal, ou le plan formé par la base 2, un angle γ qui est inférieur à l'angle β que forment les parois du plateau épandeur 10 avec le même plan horizontal, les angles γ et β étant inférieurs à l'angle α que forment les parois du bassin 1 avec le même plan horizontal. De préférence, l'angle γ est inférieur à environ 12 degré, avantageusement l'angle γ est d'environ 10 degré.

La disposition particulière du plateau épandeur 10 et du diffuseur 13 entraine le resserrement des extrémités du passage créé par ledit épandeur 10 et ledit diffuseur 13. Cela permet de compenser partiellement la perte de vitesse du flux radial en direction du pourtour du réacteur, et permet d'éviter des dépôts de biomasse sur le plateau épandeur 10.

La couverture 12 comprend en outre un collecteur de gaz 14 dont la fonction est de récupérer le gaz introduit par les moyens d'aération 7 dans la liqueur mixte. De préférence, le collecteur de gaz 14 se présente sous la forme d'une galerie circonférentielle raccordée au bord du diffuseur 13. De préférence, le collecteur de gaz 14 comprend au moins une buse 15 qui rassemble le gaz collecté en un point unique ou débouche sur une canalisation unique 20 afin de permettre soit l'évacuation du gaz, soit sa recirculation au travers de la canalisation 20 vers les moyens d'alimentation en gaz 19.

De préférence, la recirculation du gaz vers les moyens d'alimentation en gaz 19 se fait à l'aide d'une vanne à trois voies 21 et d'un clapet anti-retour 22.

La couverture 12 comprend en outre une paroi plongeante 16. De préférence, ladite paroi 16 forme l'une des parois du collecteur de gaz 14 et définit la limite extérieure de la couverture 12. La paroi 16, en combinaison avec la paroi extérieure du conduit élévateur 9 et la face inférieure du plateau-épandeur 10, délimite non seulement la zone de réaction 17B, mais, elle délimite également, en combinaison avec la paroi du bassin 1, un espace 18 circonférentiel, de section transversale triangulaire, appelé « séparateur », et dans lequel la séparation de la liqueur mixte s'effectue.

La paroi 16, qui a une forme essentiellement tronconique, de préférence la forme d'un tronc de cône, ou d'un cylindre, plonge à l'intérieur du bassin 1, et forme avec le plan vertical un angle compris entre 0 à 30°. Dans une première forme de réalisation, la paroi 16 forme un angle de 0° avec le plan vertical, c'est-à-dire que la paroi 16 plonge verticalement dans le bassin. Dans une seconde forme de réalisation, la paroi 16 forme un angle de 30° avec le plan vertical.

La paroi 16 n'est pas en contact avec la paroi du bassin 1 ce qui permet le passage de la liqueur mixte dans le séparateur 18.

Le réacteur selon l'invention fonctionne de la manière suivante. Tout d'abord, le bassin 1 est rempli de liqueur mixte, ou d'eau claire à laquelle on ajoute des boues activées. Le remplissage est complet lorsque le niveau de l'eau atteint la crête de déversement formée par les moyens de sortie de l'eau épurée 4 du bassin 1. Le réacteur est alors prêt à fonctionner.

Une fois le réacteur rempli, il convient de noter que tout débit d'alimentation en eaux usées introduit dans le bassin 1 par les moyens d'entrée de l'eau à épurer 3 se traduit par un débit de déversement équivalent vers les moyens de sortie de l'eau épurée 4 en raison de la continuité du flux.

Le réacteur rempli, mais au repos, c'est-à-dire ayant un débit d'eau à épurer nul, les moyens d'alimentation en gaz 19, un compresseur par exemple, sont mis en marche. Les moyens d'aération 7 remplissent le conduit élévateur 9 d'une multitude de fines bulles de gaz.

Si l'on considère que le gaz est de l'air, le mélange liqueur mixte/air contenu dans le conduit élévateur 9 possède une densité inférieure à celle de la liqueur mixte seule, de sorte que le mélange liqueur mixte/air remonte le long du conduit 9 sous la poussée d'Archimède exercée par l'eau se trouvant à l'extérieur du conduit 9. Il en résulte alors un effet de pompage de type « air lift », et la liqueur mixte, ainsi aérée, remonte en permanence dans le conduit élévateur 9. Lorsque le flux liqueur mixte/air ascendant touche la couverture 12 du réacteur, il est dévié et remplit l'espace entre le plateau-épandeur 10 et le diffuseur 13 vers le pourtour de diffuseur 13. Sur ce chemin, le flux liqueur mixte/air perd en vitesse et les turbulences produisent un brassage intense ce qui favorise le transfert d'oxygène de l'air vers l'eau.

L'effet de pompage « air lift », qui est assimilable à une pompe à débit élevé sous faible charge, présente également l'avantage de compenser les pertes de charge internes du réacteur, de sorte qu'il fonctionne sans perte de hauteur géodésique entre l'entrée et la sortie.

Arrivé aux extrémités de plateau épandeur 10, l'air pauvre en oxygène s'échappe par le collecteur de gaz 14, alors que la liqueur mixte, enrichie en oxygène, déborde sur la couronne 11, quitte la zone d'aération et de brassage 17A pour descendre le long de la paroi plongeante 16 et rejoint la zone de réaction et d'amortissement 17B. Dans la zone 17B, il n'y a plus de brassage, et étant donné l'importance du volume de ladite zone 17B, la liqueur mixte s'y trouve dans un état d'écoulement laminaire descendant en direction du fond du réacteur, endroit à partir duquel la liqueur mixte pénètre à nouveau dans la zone d'aération et de brassage 17A et remonte vers le haut du réacteur par le conduit 9.

Lors du fonctionnement du réacteur, c'est-à-dire pour un réacteur dont le débit d'entrée de l'eau à épurer n'est pas nul, le débit d'entrée des eaux usées et le débit de l'aération se combinent. Comme le débit de l'air-lift est un multiple du débit d'entrée, les types de régimes d'écoulement dans le réacteur ne changent pas, ni dans la zone d'aération et de brassage 17A, ni dans la zone de réaction et d'amortissement 17B.

La vitesse de circulation de la liqueur mixte étant faible dans la zone de réaction et d'amortissement 17B, le temps de séjour de la liqueur mixte y est long ce qui permet à la biomasse d'assimiler l'oxygène et de métaboliser les substances organiques.

L'espace 18 (séparateur) de section triangulaire créé par la paroi plongeante 16 en combinaison avec la paroi latérale du bassin 1, est quant à lui une zone particulièrement calme, substantiellement sans turbulences. Le débit de liqueur mixte qui entre dans le séparateur 18 est déterminé par le débit d'entrée de l'eau à épurer, néanmoins, c'est le régime laminaire dans la zone de réaction et d'amortissement 17B qui permet au séparateur 18 d'être libre de toutes turbulences.

Quand le réacteur est au repos (débit d'entrée de l'eau à épurer nul), le séparateur 18 n'est pas affecté par le mouvement laminaire de liqueur mixte dans la zone de réaction et d'amortissement 17B. Par contre, dans le réacteur en fonctionnement, et du fait de l'égalité des flux entrant/sortant, une partie de la liqueur mixte est refoulée sous la paroi plongeante 16 et rejoint le séparateur 18. Néanmoins, le séparateur 18 reste une zone est particulièrement calme, substantiellement sans turbulences car le régime laminaire de la liqueur mixte dans la zone de réaction et d'amortissement 17B est maintenu.

Le flux alimentant le séparateur 18 donne naissance à des vitesses ascensionnelles qui sont de plus en plus faibles au fur et à mesure que l'on monte en niveau dans le séparateur 18. Dans l'hypothèse d'une parfaite uniformité du champ de vitesses ascensionnelles dans chaque section horizontale du séparateur 18, de la décroissance des vitesses au voisinage de la surface, et inversement de leur croissance en profondeur, cela permet aux flocs de biomasse de ne pas s'accumuler au fond du séparateur 18. Les flocs montent dans le séparateur 18 et s'immobilisent à un niveau d'équilibre, ledit niveau étant fonction du débit traversant le séparateur 18.

Il a été surprenant d'observer que les flocs de biomasse, qui s'accumulent au niveau d'équilibre, forment un réseau immobile qui se présente sous la forme d'une structure globalement figée, et qui est rigidifiée par la « soudure » des flocs les uns aux autres qui se fait par l'intermédiaire de leur couche de mucilage.

Etant donné la configuration poreuse de cette structure, elle peut être assimilée à une « biomasse filtrante » car, de façon surprenante, elle fonctionne comme un filtre volumique.

A la figure 1, la biomasse filtrante est désignée par « BF » et la lame d'eau claire qui la surmonte par « EC ».

Ainsi, le séparateur 18 se retrouve partiellement rempli par une biomasse filtrante, permettant la filtration de l'eau, mais empêchant le passage de flocs amenés par la liqueur mixte sous la paroi plongeante 16 et les déviant vers la zone de réaction 17B.

La présence de cette biomasse filtrante permet au réacteur biologique selon l'invention de travailler dans la chambre d'activation 17 (zones 17A et 17B) avec une teneur en matière sèche d'au moins 7 kg/m³.

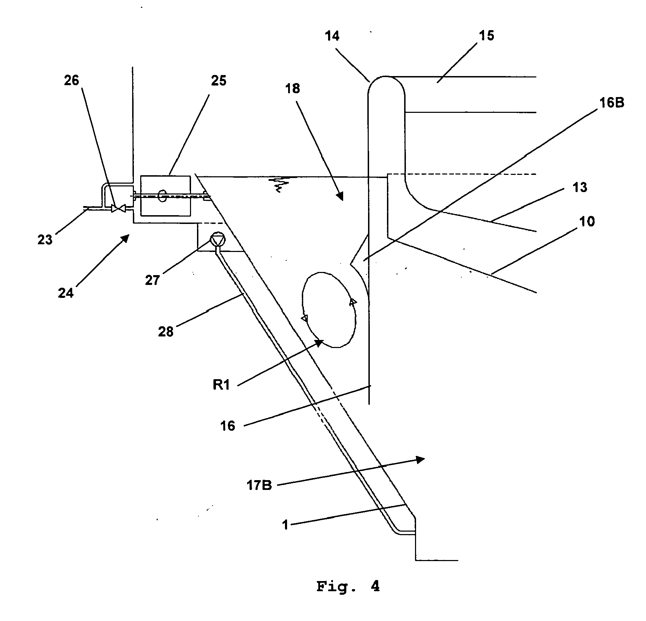

En pratique, l'hypothèse d'une parfaite uniformité des vitesses ascensionnelles dans le séparateur 18 n'est pas entièrement réalisable pour des raisons de non-symétrie (géométrie du séparateur et flux d'alimentation et de fuite) et d'un éventuel effet de Coanda, dont la combinaison confère à l'eau épurée une rotation lente R1 comme représentée en figure 4. Cette rotation n'est pas gênante tant qu'elle ne dérange pas la structure de la biomasse filtrante. On peut admettre qu'elle est même favorable à l'apparition de la biomasse filtrante étant donné qu'elle ramène les flocs entraînés par le flux ascendant vers le fond du séparateur. Néanmoins, afin de limiter ou d'éviter une propagation du mouvement R1 dans la partie supérieure du séparateur 18, il est avantageux de disposer un dispositif adéquat permettant de contrecarrer cette tendance à la rotation. Il peut s'agir, par exemple, d'une ailette 16B disposée sur la paroi plongeante 16 comme représentée à la figure 4. Il peut également s'agir de tout dispositif adéquat qui imprime à la surface de l'eau claire EC un mouvement horizontal, par exemple un mouvement horizontal tangentiel, qui crée une rotation verticale neutralisant R1.

Durant le fonctionnement du réacteur biologique selon l'invention, il a été constaté que la cohésion de la biomasse filtrante augmente avec le temps, ce qui augmente la rigidité du filtre. Or, cette rigidification de la biomasse filtrante peut être préjudiciable à la filtration car des fissures dans le filtre peuvent apparaitre. De plus, l'apport en oxygène à la biomasse filtrante par le flux traversant le séparateur 18 peut être insuffisant pour couvrir ses besoins à long terme, ce qui peut mener également à une dissociation de la biomasse filtrante. Pour contrecarrer le phénomène de rigidification du filtre et l'appauvrissement en oxygène de la biomasse, il convient de la remplacer périodiquement. Ceci peut être obtenu en arrêtant transitoirement et périodiquement l'aération. En effet, la disparition des bulles gazeuses crée un appel de liquide instantané (selon le phénomène des vases communicants) qui ne peut se faire que de l'extérieur du réacteur vers l'intérieur. Il γ a donc un transfert brusque de liquide du séparateur 18 vers la chambre de réaction 17B par le passage de liquide sous la paroi plongeante 16. Ainsi la biomasse filtrante est partiellement « aspirée » vers la zone de réaction 17B et remplacée par une nouvelle, ce qui permet d'assurer la régénération de la biomasse filtrante. Suivant les conditions de température et de charge du réacteur le nombre de régénérations peut varier entre 4 et 10 par jour.

Au fur et à mesure du fonctionnement du réacteur selon l'invention, la teneur en biomasse du réacteur augmente, c'est pourquoi des soutirages périodiques de la boue excédentaire sont effectués grâce aux moyens d'évacuation des boues excédentaires 6 situés, de préférence, dans la partie inférieure du bassin 1.

Le réacteur biologique selon l'invention présente l'avantage de permettre à la fois le traitement secondaire et l'élimination des nitrates de la liqueur mixte par dénitrification intermittente, dans la même enceinte. Pour ce traitement, le réacteur offre un volume de réaction bien supérieur aux réacteurs mixtes existants. En effet, si le gaz injecté par les moyens d'aération 7 est de l'air, de l'air extérieur ou enrichie en oxygène par exemple, le traitement secondaire est favorisé. Néanmoins, si le réacteur fonctionne en circuit fermé, la dénitrification est favorisée car l'air injecté dans le conduit 8 s'appauvrit rapidement en oxygène, ce qui permet de créer des conditions favorables à la dénitrification de la liqueur mixte. Le réacteur fonctionne alors en conditions anaérobies, et ce, de la même manière qu'il fonctionnait en conditions aérobies, le brassage étant toujours assuré par l'effet de pompage de l'airlift.

Pour un fonctionnement en conditions anaérobies, une autre alternative consiste à couper périodiquement la recirculation du gaz, l'aération cesse, l'agitation est alors interrompue, et la biomasse commence à décanter. Pendant ce processus, la métabolisation du substrat reste encore active. Les dépôts de biomasse, qui en résultent, s'accumulent au niveau de la base 2 du bassin 1. La biomasse est, soit remise en circulation lors du redémarrage de l'aération, soit éliminée par le soutirage des boues excédentaires.

De préférence, le passage de conditions aérobies aux conditions anaérobies se fait par l'utilisation d'une vanne trois voies 21, ou tout autre dispositif équivalent, permettant d'arrêter l'alimentation en gaz ou sa recirculation via une canalisation 20, vers les moyens d'alimentation en gaz 19, un compresseur par exemple.

En phase de dénitrification, l'arrêt de la circulation de gaz, outre le fait qu'il permet d'économiser l'énergie consommée par les moyens d'alimentation en gaz 19, permet également de maintenir la flexibilité de la biomasse filtrante, soit en la déformant, soit en lui permettant de se renouveler.

De préférence, le réacteur travaille périodiquement et alternativement en conditions aérobies puis en conditions anaérobies. Par exemple, pour un cycle de traitement secondaire et tertiaire, la durée de la phase aérobie peut représenter environ 30% de la durée du cycle et la phase anaérobie environ 70% de la durée du cycle. Par exemple, pour un cycle de traitement de 2 heures et demi, la phase de nitrification représente environ 45 minutes et la phase de dénitrification environ 105 minutes.

Le contrôle du passage des conditions aérobies aux conditions anaérobies est assuré par tout moyen adéquat. De préférence, il s'agit de moyens comprenant une minuterie, ou comprenant une sonde de nitrates, et comprenant en outre des moyens agissant sur la vanne 21 ou sur les moyens d'alimentation en gaz 19.

De préférence, l'eau épurée, qui est collectée par les moyens de sortie et d'affinement de l'eau épurée 4, subit, avant son déversement dans un ruisseau ou tout autre émissaire, un traitement d'affinement pour décanter les flocs qui n'auraient pas été retenus par la biomasse filtrante, par exemple en cas de débits élevés d'eaux usées (période de pluie par exemple). Ce traitement s'effectue lors du passage de l'eau épurée dans le chenal-décanteur 5 sur le fond duquel les flocs se déposent et s'accumulent. L'élimination périodique, par exemple 1 fois par jour, de ces flocs se fait, par exemple, au moyen du dispositif 24 de rinçage et de récupération. Le dispositif 24 comprend une roue à pales 25 qui permet de remuer énergiquement la masse d'eau présente dans le chenal-décanteur 5. L'eau chargée de boues est évacuée vers la base 2 du bassin 1, au moyen de la pompe 27, via la conduite de refoulement 28. Afin d'éviter le passage d'eau chargée de boues vers la canalisation 23, le niveau de l'eau dans le chenal-décanteur 5 est abaissé avant le rinçage du chenal-décanteur 5. De préférence, ceci est réalisé en ouvrant la vanne 26 et en la fermant juste avant le démarrage du rinçage, de façon à créer un volume suffisant pour stocker le volume d'eau traitée quittant le séparateur 18 pendant la durée du rinçage.

Après le traitement d'affinement, l'eau épurée peut être déversée directement dans un ruisseau ou tout autre émissaire. En effet, les analyses de caractéristiques physiques, biologiques et chimiques de l'eau épurée (tableau 1) montrent que le degré d'épuration des eaux traitées à l'aide du réacteur biologique selon l'invention est supérieur à celui des eaux traitées dans une station d'épuration classique ou à celui exigé par les recommandations en termes de rejet auxquelles les stations dépuration doivent répondre, comme par exemple les recommandations Abwasserverordnung (BGB1 IS 1108, 2625, 2461).

**Tableau 1 : Caractéristiques épuratoires mesurées sur le réacteur selon l'invention alimenté par des eaux usées domestiques.**

| **Grandeur caractéristique** | **Unité** | **Réacteur selon l'invention** | | **Recommandation sortie pour 14000 habitants-équivalent** |
|---|---|---|---|---|
| | | **Entrée** | **Sortie** | |
| Demande chimique en oxygène (DCO) | mg/l | 162 | 15 | <75 |
| Matières en suspension (MES) | mg/l | 65 | 2 | <30 |
| Ammonium (N-NH₄) | mg/l | 15 | 0.2 | <5 |
| Azote total (Nₜₒₜ) | mg/l | 24 | 9 | <15 |

Le réacteur biologique selon l'invention peut en outre être couplé à tout dispositif de traitement primaire, comme par exemple des dispositifs de dégrillage, de dessablage, ou de dégraissage, tout dispositif de traitement tertiaire complémentaire, de traitement des boues excédentaires, ou de traitement des gaz.

## Revendications

1. Un réacteur de traitement biologique des eaux usées comprenant un bassin (1) de forme essentiellement tronconique, des moyens d'entrée de l'eau usée à épurer (3), des moyens de sortie et d'affinement de l'eau épurée (4), des moyens d'évacuation des boues excédentaires (6), des moyens d'aération (7), alimentant le bassin (1) en gaz, disposés dans la partie inférieure dudit bassin (1), des moyens de recyclage du gaz desdits moyens d'aération (7), au moins un conduit élévateur (9) surplombant lesdits moyens d'aération (7) et comprenant un plateau épandeur (10) de forme essentiellement tronconique comprenant une couronne de déversement (11), une couverture (12) disposée sur ledit plateau épandeur (10), ladite couverture (12) comprenant un diffuseur (13) de forme essentiellement tronconique, un collecteur de gaz (14) et une paroi plongeante (16).

2. Le réacteur selon la revendication 1, dans lequel les parois latérales du bassin (1) forment, avec le plan horizontal formé par la base (2) dudit bassin (1), un angle α d'au moins 60°.

3. Le réacteur selon la revendication 1 ou 2, dans lequel les parois latérales du plateau épandeur (10) forment, avec le plan horizontal formé par la base (2) dudit bassin (1), un angle β de moins de 25°.

4. Le réacteur selon l'une quelconque des revendications précédentes, dans lequel les parois latérales du diffuseur (13) forment, avec le plan horizontal formé par la base (2) du bassin (1), un angle γ de moins de 12°.

5. Le réacteur selon l'une quelconque des revendications précédentes, dans lequel la paroi plongeante (16) forme avec le plan vertical un angle compris entre 0 et 30°.

6. Le réacteur selon l'une quelconque des revendications précédentes, dans lequel les moyens d'aération (7) comprennent au moins un aérateur comprenant une membrane déformable percée de trous.

7. Le réacteur selon l'une quelconque des revendications précédentes, dans lequel les moyens d'aération (7) comprennent des moyens d'alimentation en gaz (19).

8. Le réacteur selon la revendication 7, dans lequel les moyens d'alimentation en gaz (19) comprennent au moins un compresseur.

9. Le réacteur selon l'une quelconque des revendications précédentes, dans lequel le collecteur de gaz (14) se présente sous la forme d'une galerie circonférentielle raccordée au bord du diffuseur (13).

10. Le réacteur selon l'une quelconque des revendications précédentes dans lequel les moyens de recyclage du gaz desdits moyens d'aération (7) comprennent au moins une buse (15), une canalisation (20) qui dirige le gaz vers les moyens d'alimentation en gaz (19), une vanne à trois voies (21) et un clapet anti-retour (22).

11. Le réacteur selon l'une quelconque des revendications précédentes, dans lequel les moyens de sortie et d'affinement de l'eau épurée (4) comprennent un chenal-décanteur (5) disposé de façon circonférentielle sur la partie supérieure du bassin (1), lesdits moyens de sortie et d'affinement de l'eau épurée (4) comprenant en outre un dispositif (24) de rinçage et de recirculation des boues.

12. **Une** méthode de traitement des eaux usées comprenant les étapes suivantes :
a) prendre le réacteur biologique selon l'une quelconque des revendications 1 à 11,
b) remplir ledit réacteur avec de la liqueur mixte,
c) alimenter ledit réacteur avec de l'eau usée à épurer,
d) réaliser un traitement biologique aérobie de ladite eau usée en aérant le mélange de liqueur mixte et d'eau usée,
e) réaliser un traitement biologique anaérobie de ladite eau usée,
f) séparer la liqueur mixte en eau épurée et en biomasse,
g) récupérer l'eau épurée.

13. La méthode selon la revendication 12 dans laquelle l'étape e) est réalisée en recyclant l'air utilisé à l'étape d), ledit réacteur fonctionnant en circuit fermé, ou en interrompant périodiquement l'aération de l'eau usée.

14. La méthode selon l'une quelconque des revendications 12 ou 13, dans laquelle les étapes d) et e) forment un cycle de traitement biologique, et dans laquelle la durée de l'étape d) représente environ 30% de la durée dudit cycle et la durée de l'étape e) environ 70% de la durée dudit cycle.
